(19) Europäisches Patentamt / European Patent Office / Office européen des brevets

(11) **EP 2 038 440 B1**

(12) **FASCICULE DE BREVET EUROPEEN**

(45) Date de publication et mention de la délivrance du brevet:
**17.10.2012 Bulletin 2012/42**

(21) Numéro de dépôt: **07788898.0**

(22) Date de dépôt: **18.06.2007**

(51) Int Cl.:
*C22B 21/06* (2006.01)     *C22B 9/02* (2006.01)

(86) Numéro de dépôt international:
**PCT/FR2007/001005**

(87) Numéro de publication internationale:
**WO 2007/147962 (27.12.2007 Gazette 2007/52)**

(54) **PROCEDE DE RECYCLAGE DE SCRAP EN ALLIAGE D'ALUMINIUM PROVENANT DE L'INDUSTRIE AERONAUTIQUE**

VERFAHREN ZUR REZYKLIERUNG VON ALUMINIUMLEGIERUNGSSCHROTT AUS DER LUFTFAHRTINDUSTRIE

PROCESS FOR RECYCLING ALUMINIUM ALLOY SCRAP COMING FROM THE AERONAUTICAL INDUSTRY

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **23.06.2006 FR 0605642**

(43) Date de publication de la demande:
**25.03.2009 Bulletin 2009/13**

(73) Titulaire: **Constellium France**
**75008 Paris (FR)**

(72) Inventeurs:
• **VERDIER, Jean-François**
**F-63500 Issoire (FR)**
• **BUTRUILLE, Jean-Rémi**
**F-38330 Montbonnot Saint Martin (FR)**
• **LEROY, Michel**
**F-38120 Saint-Egrève (FR)**
• **VALAX, Didier**
**F-09110 Ax Les Thermes (FR)**

(74) Mandataire: **Fénot, Dominique et al**
**Alcan Centre de Recherches de Voreppe**
**725, rue Aristide Berges- BP 27**
**38341 Voreppe (FR)**

(56) Documents cités:
EP-A1- 0 091 386     EP-A1- 1 101 830
FR-A- 2 788 283     JP-A- 7 207 378
US-A- 4 221 590     US-A- 4 734 127

EP 2 038 440 B1

**Description**

**Domaine de l'invention**

L'invention concerne la fabrication de lingots de refusion en alliages d'aluminium à partir de scrap (matières premières pour recyclage, telles que des copeaux ou chutes d'usinage). L'invention concerne particulièrement le recyclage du scrap issus des procédés de fabrication des industries aéronautiques et spatiales.

**Etat de la technique**

Dans plusieurs industries, les procédés de fabrication de produits métalliques finis par des procédés tels que l'usinage, la transformation, le découpage de produits intermédiaires génèrent des quantités importantes de copeaux et de chutes d'usinage. Dans le présent texte on désigne ces déchets par le terme « scrap » qui est utilisé dans la norme EN 12258-3 pour désigner les produits pour recyclage de l'aluminium. Les industries aéronautiques et spatiales génèrent en particulier une quantité importante de scrap car de nombreuses pièces de structure et composants d'un aéronef sont obtenues par usinage intégral de pièces massives. Cependant le scrap est souvent difficilement recyclable directement en raison du mélange avec d'autres alliages d'aluminium ou d'autres matériaux utilisés en aéronautique tels que les aciers inoxydables et le titane (Wilson et al. Journal de Physique C -75 1987). Les déchets d'usinage des alliages aéronautiques sont ainsi par exemple recyclés dans des alliages aluminium-silicium destinés aux produits moulés en particulier pour l'industrie automobile. Cette voie de valorisation est la filière habituelle du recyclage de scrap, elle conduit à une perte partielle de la valeur du métal.

Il est également possible de fabriquer des produits en alliages d'aluminium destinés à des applications aéronautiques et spatiales à partir de scrap provenant de l'industrie aéronautique dans une filière de recyclage intégrée. Les recyclages successifs d'alliages de la série 2XXX ou de la série 7XXX dans cette filière intégrée conduisent cependant généralement à l'augmentation de la teneur de certaines impuretés telles que le fer et le silicium. En effet, lors des étapes d'usinage, de manutention, de stockage il est fréquent que des poussières viennent s'agréger sur le scrap et ces poussières sont généralement riches en fer et en silicium qui sont deux éléments très communs dans tout environnement industriel. De même lors du processus de fusion du scrap, le contact avec les outils et les parois des fours produit fréquemment une augmentation des teneurs en fer et silicium.

Par ailleurs, de nouvelles nuances d'alliages de la série 2XXX ou de la série 7XXX pour lesquels les teneurs en fer et en silicium peuvent être limitées jusqu'à moins de 0,07 % en poids, voire dans certains cas moins de 0,05% en poids, s'avèrent difficiles voire impossibles à fabriquer à partir de scrap avec les procédés actuels de recyclage.

L'application d'opérations de purification à bain de métal liquide obtenu par fusion de scrap a été envisagée.

Les demandes de brevet JP07166259, JP07207378, JP09178149 et JP09263853 (Furukawa Electric) cherchent à résoudre le problème du recyclage des tôles plaquées destinées à la fabrication d'échangeurs thermiques par brasage: Le scrap de ces produits contient plusieurs % en poids de silicium ce qui rend difficile le recyclage. Des procédés comprenant une étape de cristallisation fractionnée et une étape finale de pressage des cristaux formés pour éjecter le liquide résiduel sont décrits dans ces demandes de brevet. Ces procédés ont pour objectif l'élimination du silicium. Les problèmes spécifiques posés par la purification du fer ne sont pas abordés dans ces demandes. La demande de brevet JP 09078152 décrit également un procédé de purification de scrap contenant des impuretés telles que le Fe et Si par cristallisation. D'autres procédés de ségrégation comprenant une étape de refroidissement à l'aide d'un sel fondu ont également été envisagés, en particulier pour la production de métal pur de type P0101 dont les seules impuretés sont le fer et le silicium à une teneur inférieure à 0,1% en poids (voir EP 1 520 052, EP 1 520 053 et WO 2005/049875, Corus Technology). La mise en oeuvre d'un sel fondu ajoute une complexité importante à ce type d'opération de recyclage.

La demande PCT WO 2005/095658 (Corus Technology) décrit le principe d'un procédé dans lequel le métal liquide à purifier est refroidi de façon à former simultanément des cristaux purifiés et des cristaux contenant un élément étranger (tel qu'un élément formant des composés intermétalliques) et dans lequel ces deux types de cristaux sont séparés par une technique de séparation solide-solide. La technologie de séparation solide-solide n'est pas décrite dans cette demande de brevet.

L'ajout d'un additif permettant de forcer la formation de précipités et de faciliter ainsi leur séparation a également été envisagée. Ainsi l'ajout de Mn est encouragé dans les brevets US 5,741,348 (Hoogovens) et EP 1 288 319 (Corus Technology) et dans la demande de brevet JP0835021 (Agency of Ind science&technol) pour former des précipités intermétalliques contenant du fer de façon à l'éliminer. Ces procédés ne sont pas applicables dans les systèmes complexes tels que les alliages aéronautiques en raison du nombre d'intermétalliques à considérer.

Par ailleurs, l'ajout de bore de façon à éliminer des éléments particuliers tels que les éléments péritectiques a été envisagé. Ainsi, le brevet EP 1 101 830 (Pechiney Rhenalu) décrit un procédé de fabrication d'un produit intermédiaire en un alliage déterminé de la série 7XXX à partir de produits de recyclage. De façon à pouvoir recycler des chutes provenant de différents d'alliages de la série 7XXX sans avoir à effectuer de tri, ce brevet décrit un procédé comprenant au moins une étape de raffinage desdits produits pour recyclage permettant de réduire la teneur en un élément péritectique tel que Cr ou Zr à l'aide, par exemple, d'un agent précipitant sélectif comprenant du bore.

Le recyclage du scrap issu de l'industrie aéronautique pose plusieurs problèmes spécifiques qui ne sont pas résolus dans l'art antérieur, en particulier :

- diminuer de façon industrielle la teneur en éléments qui ne permettraient pas le recyclage dans des nuances équivalentes tels que Fe et Si, en particulier obtenir des teneurs en Fe et Si inférieures à 0,1 % en poids et de préférence inférieures à 0,05 % en poids,
- ne pas diminuer la teneur des éléments communs à la plupart de ces alliages (Zn, Mg, Cu dans la série 7XXX, Cu et Mg dans la série 2XXX),
- dans certains cas, ne pas diminuer la teneur de certains éléments onéreux (Li, Ag, Sc) pouvant être utilisés dans certains alliages.

Il serait donc utile d'inventer un procédé de recyclage comprenant une étape permettant de purifier en fer et en silicium le scrap des alliages d'aluminium de la série 2XXX ou de la série 7XXX, sans toutefois éliminer les éléments d'addition tels que par exemple le zinc, le cuivre et le magnésium.

La demanderesse a donc cherché un procédé de fabrication de produits intermédiaires utilisant des scrap issu de l'industrie aéronautique qui facilite le recyclage des alliages de la série 7XXX et de la série 2XXX.

**Objet de l'invention**

Un premier objet de l'invention est un procédé de fabrication d'un bloc de refusion à base d'aluminium destiné à l'élaboration d'alliage d'aluminium pour l'industrie aéronautique dans lequel

(i) on approvisionne du scrap contenant majoritairement des alliages d'aluminium utilisés dans l'industrie aéronautique pendant une étape d'approvisionnement ;
(ii) on fait fondre ledit scrap dans un four de fusion de façon à obtenir un bain de métal liquide initial pendant une étape de fusion ;
(iii) on fait subir au bain de métal liquide initial une purification par cristallisation fractionnée de façon à obtenir une masse solidifiée et un bain de liquide résiduel pendant une étape de ségrégation ;
(iv) on récupère la masse solidifiée de façon à obtenir un bloc de refusion pendant une étape de récupération, dans lequel l'ensemble du métal est chargé initialement puis soumis à la cristallisation fractionnée, la vitesse de cristallisation donnée en masse de cristaux formés, exprimés en pourcentage du poids initialement chargé, par heure de cristallisation étant comprise entre environ 3,8 %/h et environ 6,2 %/h.

Un autre objet de l'invention est un procédé de fabrication d'un produit semi-fini dans lequel on fait fondre au moins un bloc de refusion obtenu par le procédé selon l'invention.

**Description des figures**

La figure 1 illustre un dispositif de ségrégation pouvant être utilisé dans le cadre de l'invention.

La figure 2 illustre l'évolution de la température du métal liquide en fonction de la durée de cristallisation pour les différents essais effectués.

La figure 3 illustre l'évolution du taux de purification en fonction de la vitesse de cristallisation programmée.

**Description de l'invention**

Sauf mention contraire, toutes les indications relatives à la composition chimique des alliages sont exprimées en pourcent massique.. La désignation des alliages suit les règles de The Aluminum Association, connues de l'homme du métier. La composition chimique d'alliages d'aluminium normalisés est définie par exemple dans la norme EN 573-3 intitulée « Aluminium et alliages d'aluminium. Composition chimique et forme des produits corroyés. Partie 3 :composition chimique ».

Sauf mention contraire, les définitions de la norme européenne EN 12258-1 intitulée « Aluminium et alliages d'aluminium - Termes et définitions - Partie 1 : Termes généraux » s'appliquent. Les termes liés au scrap et son recyclage sont décrits dans la norme EN12258-3 intitulée « Aluminium et alliages d'aluminium — Termes et définitions — Partie 3 :Scrap (matières premières pour recyclage) ».

Le terme « usinage » comprend tout procédé d'enlèvement de matière tel que le tournage, le fraisage, le perçage, l'alésage, le taraudage, l'électroérosion, la rectification, le polissage.

Dans le cadre de la présente invention, le terme « produit semi-fini » est utilisé pour désigner un demi-produit destiné à subir des opérations de corroyage tel que, notamment, une plaque de laminage, une billette de filage, un bloc de forge. Dans le cadre de la présente invention, le terme « bloc de refusion » désigne un demi-produit destiné à être refondu, à base d'aluminium et dont la somme des teneurs en Zn, Cu, Mg et Li est d'au moins 3 % en poids. D'une manière avantageuse la somme des teneurs en Zn, Cu, Mg et Li est d'au moins 4 % en poids et de façon préférée d'au moins 5 % en poids, dans les blocs de refusion selon l'invention.

Le terme « élément de structure » ou « élément structural » se réfère à un élément utilisé en construction mécanique pour lequel les caractéristiques mécaniques statiques et / ou dynamiques ont une importance particulière pour la performance et l'intégrité de la structure, et pour lequel un calcul de la structure est généralement prescrit ou effectué. Pour un avion, ces éléments de structure comprennent notamment les éléments qui composent le fuselage (tels que la peau de fuselage (fuselage skin en anglais), les raidisseurs ou lisses de fuselage (stringers), les cloisons étanches (bulkheads), les cadres de fuselage (circumferential frames), les ailes (tels que la peau de voilure (wing skin), les raidisseurs (stringers ou stiffeners), les nervures (ribs) et longerons (spars)) et l'empennage composé notamment de stabilisateurs horizontaux et verticaux (horizontal or vertical stabilisers), ainsi que les profilés de plancher (floor beams), les rails de sièges (seat tracks) et les portes.

Le procédé selon l'invention comprend les étapes de : approvisionnement du scrap, fusion du scrap, purification par ségrégation, récupération de la masse solidifiée, optionnellement purification des éléments péritectiques et fabrication de produits semi-finis.

Les différentes étapes du procédé selon l'invention peuvent être mises en oeuvre de façon continue, semi-continue ou discontinue (batch). Il est possible dans certains modes de réalisation de réaliser une partie des étapes de façon continue, telle que par exemple l'étape de fusion, et une autre partie des étapes de façon discontinue, telle que par exemple l'étape de ségrégation. D'une manière avantageuse dans le mode de réalisation semi-continu ou discontinu les différentes étapes citées dans le paragraphe précédent sont réalisées successivement.

1/ Approvisionnement du scrap

Le scrap susceptible d'être recyclé par le procédé selon la présente l'invention peut se présenter sous différentes formes.

Si le scrap est sous forme massive il est généralement destiné à une fusion directe.

En général, le scrap est sous forme divisée, tel que les copeaux, tournures, chutes ou rognures et recouvert de lubrifiants qui peuvent être des émulsions ou des huiles entières et qui sont généralisés ici par le terme « huile ». La quantité d'huile présente sur le scrap varie en fonction de l'étape de fabrication au cours de laquelle il est généré et de la technologie utilisée pour l'enlèvement du métal. Ainsi la quantité d'huile présente sur le scrap obtenu lors de l'opération de scalpage des plaques de laminage est généralement faible. En revanche, la quantité d'huile présente sur le scrap provenant d'opérations d'usinage est beaucoup plus élevée. Quelle que soit la quantité d'huile présente sur le scrap, la présente invention pourra être utilisée. Une étape préliminaire de déshuilage peut éventuellement s'avérer nécessaire ou au moins utile. Elle peut être effectuée par toutes les méthodes classiques de nettoyage chimique et/ou thermique. Dans le cas d'un dégraissage chimique a l'aide d'un produit aqueux, une étape de séchage est nécessaire. Une méthode avantageuse de dégraissage consiste à utiliser un four cylindrique tournant avec brûleur (type IDEX®), l'atmosphère de ce type de four contient peu d'oxygène, typiquement moins de 5% ou même 1%, pour éviter que les huiles ne s'enflamment. La gestion de la teneur en oxygène est réalisée dans ce type de four à l'aide d'une sonde de mesure et d'une boucle de régulation.

Le scrap compacté peut nécessiter une étape de broyage.

Le scrap qui est utilisé dans le cadre de la présente invention contient majoritairement des alliages d'aluminium utilisés dans l'industrie aéronautique, c'est à dire qu'il comporte au moins 50% préférentiellement au moins 70% et encore plus préférentiellement au moins 90% d'alliages d'aluminium utilisés dans l'industrie aéronautique. Dans le cadre de la présente invention, « alliages d'aluminium utilisés dans l'industrie aéronautique » signifie des alliages appartenant aux séries 2XXX, 6XXX et 7XXX. Il est préférable que le scrap qui est utilisé dans le cadre de la présente invention soit trié de façon à comporter majoritairement soit des alliages de la série 7XXX soit des alliages de la série 2XXX, c'est à dire que le scrap comporte au moins 50% préférentiellement au moins 70% et encore plus préférentiellement au moins 90% des alliages de la série choisie. De façon avantageuse ces alliages sont convenablement triés, c'est à dire que le scrap provenant d'une série différente de celle du scrap à recycler est de préférence limité à 5% et de manière encore plus avantageuse à 1%. Les alliages de la série 7XXX qui conviennent sont notamment les alliages 7010, 7040, 7050, 7150, 7250, 7055, 7056, 7068, 7049, 7140, 7149, 7249, 7349, 7449, 7075, 7175 et 7475. Pour les alliages de la série 2XXX, il est avantageux de séparer les alliages contenant du lithium et/ou de l'argent des alliages n'en contenant pas au-delà du niveau d'impureté, typiquement 0,05% en poids. Les alliages de la série 2XXX ne contenant pas de lithium et/ou d'argent qui conviennent sont notamment les alliages 2014, 2022, 2023, 2024, 2026, 2027, 2056, 2224, 2324 et 2524. Les alliages de la série 2XXX contenant du lithium et/ou de l'argent qui conviennent sont notamment les alliages 2050, 2090, 2091, 2094, 2095, 2097, 2098, 2099, 2039, 2139, 2195, 2196, 2197, 2199, 2297 et 2397, tels que définis par l'Aluminum Association. L'avantage d'utiliser des déchets triés est de faciliter l'utilisation des blocs de refusion obtenus par le procédé selon l'invention dans des alliages de la même série. Le procédé selon l'invention est également avantageux pour le recyclage de scrap contenant du scandium.

Il est préférable que le scrap qui est utilisé dans le cadre de la présente invention ne soit pas pollué en Fe et en Si par des déchets n'étant pas en alliage d'aluminium. Le procédé selon l'invention peut comprendre une étape destinée à réduire la quantité de déchets ferreux. La séparation des métaux ferreux peut être effectuée par tri magnétique et / ou tri par courant de Foucault ; cette dernière méthode convenant particulièrement pour la séparation des déchets magnétiques (métaux blancs, inox, ...) et amagnétiques (métaux rouges, cuivre, laiton,...). Ainsi on peut limiter la teneur en Fe du scrap provenant de pièces en alliages ferreux. On peut encore améliorer le tri du scrap à l'aide d'un dispositif basé sur les différences de taille de particule, de masse volumique et/ou de conductivité électrique tel que décrit dans US 5,060,871.

En résumé, l'étape d'approvisionnement inclut, le cas échéant en fonction de la définition initiale du scrap, les opérations de

- sélection de la série (généralement 2XXX ou 7XXX) des alliages qui composent le scrap et tri approprié,
- séparation d'éventuelles impuretés métalliques ou non métalliques,
- optionnellement déshuilage.

Ces opérations peuvent éventuellement être remplacées par l'approvisionnement d'un scrap de caractéristiques bien définies.

### 2/ Fusion du scrap

La fusion du scrap est effectuée dans un four de fusion et permet d'obtenir un bain de métal liquide initial. Le scrap utilisé contenant majoritairement des alliages d'aluminium utilisés dans l'industrie aéronautique, la somme des teneurs en Zn, Cu, Mg et Li dans le bain de métal liquide initial est toujours supérieure à 4 % en poids. D'une manière avantageuse la somme des teneurs en Zn, Cu, Mg et Li est supérieure à 6 % en poids et de façon préférée supérieure à 8 % en poids, dans le bain de métal liquide initial.

Dans une réalisation avantageuse de l'invention, le four de fusion utilisé est un four à brassage électromagnétique (four à induction), ce type de four permet en effet de limiter la combustion du scrap. Dans le cas de la fusion d'alliages de la série 2XXX contenant du lithium et/ou de l'argent, il est avantageux de créer sur le bain de métal liquide un matelas flottant de scrap permettant de protéger le bain de métal liquide de l'oxydation pendant tout ou partie de l'étape de fusion.

### 3/ Purification par ségrégation

Les principaux procédés connus de purification de l'aluminium sont le procédé de purification par électrolyse (dit procédé « 3 couches » ou « Gadeau process ») et le procédé de purification par cristallisation fractionnée (dit procédé de « ségrégation »). Ces procédés sont utilisés dans l'industrie de l'aluminium exclusivement pour obtenir du métal de pureté très élevée (ayant typiquement une teneur en aluminium supérieure à 99,9 % en poids et pouvant atteindre 99,999 %) à partir de métal déjà relativement pur (ayant typiquement une teneur en aluminium supérieure à 99,5% en poids, voire supérieure à 99% en poids). Ainsi les brevets EP 0 091 386 et US 6,406,515 (Aluminium Pechiney) ou le brevet US 4,734,127 (Nippon Light Metal) décrivent des procédés de ségrégation d'aluminium liquide dont la teneur totale en impuretés est de l'ordre de 500 à 1500 ppm (soit une teneur en aluminium supérieure à 99,85 % en poids) et n'envisagent pas l'application de ces procédés pour des teneurs en aluminium du métal de départ inférieures à 99% en poids. Le procédé de ségrégation permet en particulier de purifier les éléments ayant un coefficient de partage faible. Le coefficient de partage est le rapport à l'équilibre entre la concentration de l'élément dans la phase solide et sa concentration dans la phase liquide.

L'utilisation de ce type de procédés pour le recyclage du scrap chargé en impuretés nécessite la résolution de nombreux problèmes techniques et économiques car ces procédés ont été optimisés pour la fabrication de produits à destination de l'industrie électronique dont les contraintes n'ont rien à voir avec celles du recyclage du scrap. Ainsi le ratio entre le coût des opérations et la valeur des produits est beaucoup plus faible dans le cas de la fabrication de métal haute pureté que dans le cas de recyclage de scrap.

Par ailleurs, il existe plusieurs différences physico-chimiques entre l'aluminium liquide pur ou relativement pur c'est-à-dire des alliages de la série 1XXX dont la teneur totale en éléments autres que l'aluminium est au plus de 1% et les alliages d'aluminium chargés dont la teneur totale des éléments Cu, Zn, Mg et Li est supérieure à 4% en poids qui ont des conséquences importantes dans le cadre de l'utilisation d'un procédé de ségrégation.

D'abord, l'intervalle de solidification, c'est à dire l'écart de température entre le liquidus et le solidus, des alliages chargés est beaucoup plus important que celui du métal pur. Ensuite, la température du métal liquide évolue beaucoup plus avec le degré de purification dans le cas d'un alliage chargé que dans le cas de métal pur. Par ailleurs, dans le cas d'un alliage chargé, le liquide résiduel qui s'enrichit en impuretés au cours de la purification peut atteindre la composition eutectique à laquelle une précipitation de particules intermétalliques se produit. Ces particules intermétalliques risquent de se mélanger avec les cristaux purifiés et de dégrader ainsi fortement la purification. Enfin, le nombre d'éléments interagissant dans un alliage chargé rend les prévisions théoriques sur la purification très difficiles voir impossibles. Ainsi, le coefficient de partage qui est connu de façon assez précise pour les mélanges binaires, est inconnu dans le cas d'un alliage chargé tel qu'un alliage 2XXX ou 7XXX.

La transposition de procédés développés pour le métal pur à la purification de scrap d'alliages dont la teneur totale des éléments Cu, Zn, Mg et Li est supérieure à 4% en poids est donc très incertaine car de nombreux paramètres physiques sont très différents et les conséquences au niveau par exemple du contrôle thermique du procédé sont importantes, ce qui rendent impossibles les prévisions théoriques.

Dans le cadre de l'invention, une purification par cristallisation fractionnée pendant une étape dite de ségrégation est réalisée de façon à obtenir une masse solidifiée purifiée et un bain de liquide résiduel enrichi en impuretés. On peut utiliser des procédés de cristallisation fractionnée dans lesquels le métal est solidifié sur un rotor refroidi. La demande de brevet JP 11-100620 et le brevet US 6,398,845 décrivent par exemple ce type de procédé. On peut également utiliser des procédés de cristallisation fractionnée dans lesquels on utilise un four dont la sole est refroidie tel que décrit par exemple dans la demande de brevet JP 58-104132 . D'une manière avantageuse, il est préférable d'utiliser des procédés de cristallisation fractionnée dans lesquels il existe une refusion partielle des cristaux formés ce qui tend à améliorer la purification. On peut par exemple utiliser un procédé tel que décrit dans les brevets US 4,221,590 et US 4,294,612 dans lesquels une refusion partielle des cristaux formés est obtenue par chauffage de la sole du four. Le brevet FR 2 788 283 (Aluminium Pechiney) décrit également un procédé comprenant une refusion partielle permettant d'obtenir du métal raffiné et ultra raffiné en tassant périodiquement et de façon contrôlée les cristaux formés par cristallisation fractionnée. Ce brevet décrit également un dispositif permettant de mettre en oeuvre ledit procédé. Dans un mode de réalisation avantageux de l'invention la masse solidifiée subit au moins une refusion partielle au cours de l'étape de ségrégation pour augmenter le coefficient de purification.

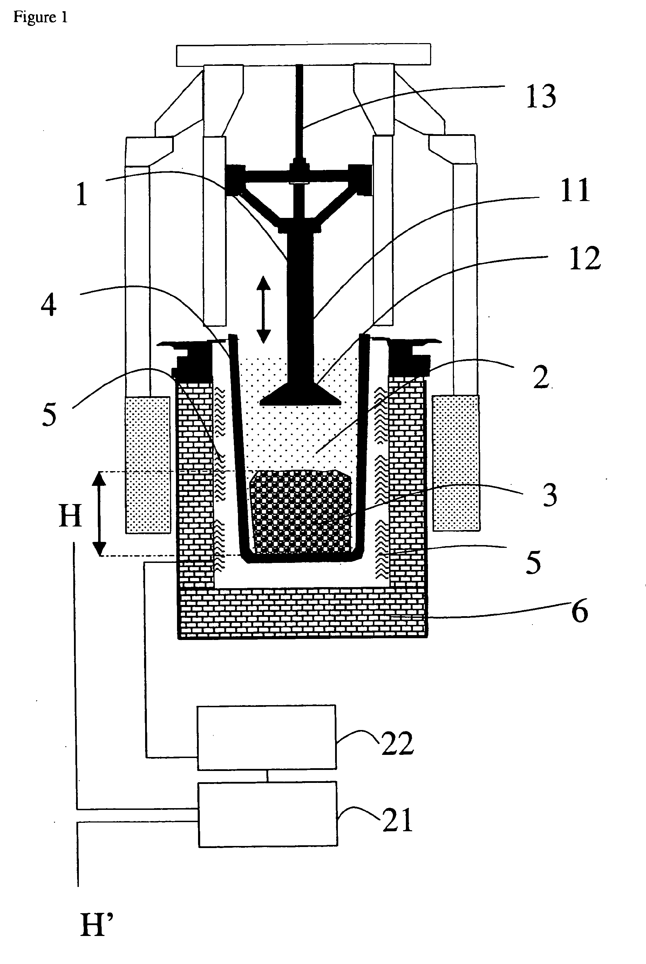

De façon avantageuse la cristallisation fractionnée est réalisée à l'aide d'un dispositif permettant d'effectuer la cristallisation à une vitesse prédéterminée, la vitesse de cristallisation étant la quantité de cristaux formée par unité de temps. La figure 1 illustre un dispositif pouvant être utilisé de façon avantageuse pour l'étape de ségrégation. Le dispositif comprend un creuset réfractaire (4), un four (6) muni d'au moins un moyen de chauffage (5), au moins un moyen de tassage (1), comprenant un embout de tassage (12), une tige solidaire de cet embout (11) et des moyens pour déplacer verticalement l'ensemble tige-embout (13). Le scrap fondu (2) est contenu dans le creuset réfractaire (4) et la cristallisation permettant d'obtenir une masse solidifiée (3) est obtenue grâce à une baisse de la température du métal liquide. Le dispositif comprend un moyen permettant de mesurer la hauteur de masse solide H et des moyens tels qu'une unité de contrôle (21) et une unité de puissance (22) pour piloter le fonctionnement du ou des moyens de chauffage en fonction de la hauteur de masse solide mesurée H et de la valeur cible H' de façon à obtenir une vitesse de cristallisation prédéterminée. De façon avantageuse, le moyen de tassage (1) permet à la fois de tasser les cristaux formés et de mesurer la hauteur H de masse solide. Avantageusement, on procède à des immersions et des émersions alternées du moyen de tassage, la durée entre deux émersions successives étant comprise entre 20 secondes et 10 minutes.

L'ensemble du métal est chargé initialement puis soumis à la cristallisation fractionnée, la vitesse de cristallisation donnée en masse de cristaux formés, exprimés en pourcentage du poids initialement chargé, par heure de cristallisation est comprise entre environ 3,8 %/h et environ 6,2 %/h. et de façon préférée comprise entre 4%/h et 6%/h. Dans un mode de réalisation avantageux dans lequel le poids initialement chargé est typiquement environ de 2300 kg, la vitesse de cristallisation est comprise préférentiellement entre environ 90 kg/h (kilogramme par heure) et environ 140 kg/h et de manière préférée entre environ 100 kg/h et environ 130 kg/h.

Si la vitesse de cristallisation est trop élevée, la purification est faible et on obtient une masse solide ayant une composition voisine de celle du scrap fondu. Dans ce cas, la refusion partielle des cristaux formés au cours de l'opération, qui est en effet un facteur très favorable pour la purification, est trop limitée. Si la vitesse de cristallisation est trop faible, des particules intermétalliques peuvent s'incorporer à la masse solidifiée et dégrader sa pureté. Par ailleurs, si la vitesse de cristallisation est trop faible, l'opération risque de perdre sont intérêt économique.

On appelle « rendement » de l'étape de ségrégation le rapport entre la masse du bloc de refusion obtenu et la masse initiale de scrap fondu, ce rendement peut être exprimé en pourcentage. Si le rendement est trop faible, l'étape de ségrégation ne présente pas d'intérêt économique. Si le rendement est trop élevé, le liquide résiduel en fin d'étape est très chargé en éléments d'alliage ce qui peut provoquer la formation de particules intermétalliques néfastes à la pureté de la masse solidifiée et aussi rendre ce liquide résiduel impur difficile à valoriser économiquement. D'une façon avantageuse, le rendement de l'étape de ségrégation est compris entre environ 50% et environ 90% et de manière préférée entre environ 60% et environ 80%.

Dans un mode de réalisation avantageux de l'invention, la cristallisation fractionnée est réalisée à l'aide d'un dispositif comprenant un creuset réfractaire (4), un four (6) muni d'au moins un moyen de chauffage (5), au moins un moyen de tassage (1), comprenant un embout de tassage (12), une tige solidaire de cet embout (11) et des moyens pour déplacer verticalement l'ensemble tige-embout (13), un moyen de mesure permettant la mesure en continu de la température du métal liquide et une boucle de régulation permettant le pilotage des moyens de chauffage en fonction de la température du métal liquide. Dans ce mode de réalisation avantageux on impose une courbe de diminution prédéterminée de la température du métal liquide. De façon avantageuse, la diminution de la température du métal liquide est comprise entre 1 et 5 °C/h et de manière préférée entre 2 et 4 °C/h.

Dans une réalisation avantageuse de l'invention, l'étape de ségrégation est stoppée en fonction de la température du métal liquide. Avantageusement, l'étape de ségrégation est arrêtée quand la température du métal liquide atteint 570 °C et de manière préférée quand elle atteint 580°C.

<u>4/ Récupération de la masse solidifiée</u>

Après l'étape de ségrégation, on sépare le liquide résiduel de la masse solidifiée. D'une façon avantageuse, cette séparation est effectuée par égouttage, en basculant le creuset réfractaire dans lequel a été effectuée l'étape de ségrégation. L'angle de basculement est choisi de façon à égoutter rapidement le liquide sans toute fois courir le risque d'une chute de la masse solidifiée. Dans un autre mode de réalisation de l'invention, le liquide résiduel est aspiré à l'aide d'un moyen approprié.

La masse solidifiée est récupérée à l'aide d'un moyen approprié. Dans le cas où la masse solidifiée est située dans un creuset réfractaire, on peut de façon avantageuse percer la surface de la masse solidifiée de façon à introduire un moyen de levage permettant d'extraire la masse solidifiée du creuset réfractaire. La masse solidifiée obtenue peut être utilisée comme bloc de refusion soit en l'état, soit usinée en surface et/ou sciée pour être utilisée comme bloc de refusion. Le bloc de refusion est caractérisé en ce que sa teneur moyenne en fer est 5 fois inférieure et de manière préférée 10 fois inférieure à celle à celle bain de métal liquide initial obtenu à l'issue de l'étape de fusion.. De manière préférée, la teneur en fer et la teneur silicium du bloc de refusion sont inférieures à 0,1% en poids et de manière préférée inférieures à 0,05 % en poids.

Avantageusement, le poids des blocs de refusion est d'au moins 1000 kg et de manière préférée d'au moins 1300 kg.

<u>5/ Purification optionnelle des éléments péritectiques</u>

Il peut être avantageux de réaliser une étape supplémentaire consistant à purifier les éléments péritectiques, c'est à dire des éléments dont le coefficient de partage est supérieur à 1, et en particulier le chrome et le zirconium. D'une manière avantageuse, cette étape est réalisée par précipitation d'au moins un élément péritectique à l'aide d'un agent précipitant sélectif comprenant du bore et séparation des produits de précipitation formés.

Cette étape est de façon avantageuse positionnée entre les étapes de fusion et de ségrégation pour les avantages techniques suivants :

l es procédés de ségrégation ne permettent pas la purification des éléments péritectiques, au contraire, car ceux-ci, par définition, sont présents dans les premiers cristaux formés. Il est donc avantageux de les purifier avant l'étape de ségrégation qui au contraire conduirait à un certain enrichissement de ces éléments.
l e procédé de ségrégation selon l'invention permet d'obtenir directement du métal solidifié et une seconde étape de fusion serait nécessaire à la réalisation de l'étape de purification des éléments péritectiques si celle-ci était positionnée après la ségrégation.

Dans le cas ou le tri des déchets a permis d'éviter le mélange entre des alliages contenant différents éléments péritectiques, cette étape peut ne pas être nécessaire.

<u>6/ Fabrication de produits semi-finis.</u>

Les blocs de refusion obtenus par le procédé selon l'invention sont utilisables pour la fabrication de produits semi-finis destinés à l'industrie aéronautique. Les blocs de refusion obtenus par le procédé selon l'invention sont avantageux car ils permettent d'apporter des éléments d'alliage tels que Zn Cu, Mg et Li sans apporter d'impuretés telles que Fe et Si, ce qui ne serait pas possible par l'ajout direct de scrap contenant majoritairement des alliages d'aluminium utilisés dans l'industrie aéronautique

Dans un mode de réalisation de l'invention, on fait fondre au moins un bloc de refusion obtenu par le procédé selon l'invention avec éventuellement d'autres types de lingots d'aluminium, on élabore un alliage destiné à l'industrie aéronautique, typiquement un alliage de la série 7XXX ou de la série 2XXX, on coule cet alliage sous la forme d'un produit semi-fini.

Le produit semi-fini obtenu peut être utilisé pour la fabrication d'un élément de structure d'avion.

**Exemple**

Dans les différents essais réalisés, on réalise les étapes suivantes :

- collecte de scrap en alliage 7075
- fusion d'une quantité de scrap suffisante pour alimenter un dispositif de ségrégation
- cristallisation fractionnée avec une vitesse de formation des cristaux prédéterminée
- égouttage du liquide impur résiduel

Les essais ont été réalisés dans des fours destinés à la cristallisation fractionnée similaires à ceux décrits dans le brevet FR2788283, munis d'un dispositif permettant de contrôler la vitesse de cristallisation. La figure 1 illustre le dispositif utilisé pour les essais. Le moyen de tassage permet de mesurer la hauteur H de cristaux formés. Une boucle de régulation agissant sur la puissance de chauffe permet de programmer la vitesse de cristallisation à une valeur prédéterminée.

Les essais réalisés sont décrits dans le tableau 1.

Tableau 1 : paramètres des essais réalisés.

| Essai | Diamètre creuset (mm) | Hauteur creuset (mm) | Poids visé du bloom (kg) | Durée de cristallisation (h) | Vitesse de cristallisation programmée (kg/h) | Fraction solidifiée programmée (%) | Vitesse de cristallisation programmée (%/h) |
|---|---|---|---|---|---|---|---|
| 1 | 800 | 2050 | 1550 | 20 | 78 | 74% | 3,7 |
| 2 | 800 | 2050 | 1550 | 20 | 78 | 74% | 3,7 |
| 3 | 800 | 2050 | 1350 | 12 | 113 | 64% | 5,4 |
| 4 | 800 | 2050 | 1350 | 11 | 123 | 64% | 5,8 |
| 5 | 860 | 2050 | 1700 | 12 | 142 | 74% | 6,2 |
| 6 | 860 | 2050 | 1800 | 12 | 150 | 78% | 6,5 |

Une analyse du métal de départ est réalisée après fusion complète. Pour l'essai n°3, cette analyse n'a pas été effectuée, les lots de scrap étant les mêmes pour tous les essais, la composition initiale est très probablement du même ordre de grandeur pour l'essai n°3 que pour les autres essais. Des difficultés techniques ont été rencontrées pour l'analyse de silicium, les résultats sont donnés pour indication mais la précision obtenue est médiocre.

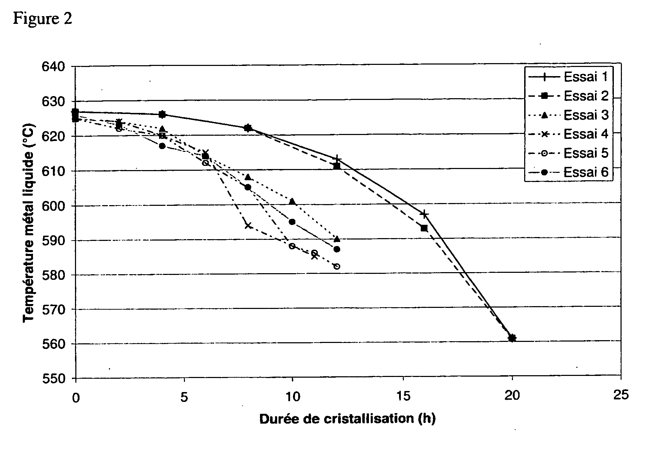

La température du métal liquide a été mesurée toutes les deux heures à l'aide d'un thermocouple. La figure 2 montre l'évolution de la température avec la durée de cristallisation. Le métal liquide résiduel a été analysé en fin d'opération. Le métal liquide résiduel a été vidangé en fin d'essai par basculement du creuset. Cette opération finale n'a pas pu être réalisée pour l'essai 4.

Le métal solidifié a enfin été extrait du creuset et pesé.

La détermination du bilan matière permettant de donner avec précision le coefficient de purification obtenu pour chaque opération s'avère difficile en raison des imprécisions sur les poids et sur les analyses. Un indicateur $X_i$ de la purification est calculé pour chaque élément i de la façon suivante :

$$X_i = \frac{[i]_0}{[i]_f} * \frac{1}{fs}$$

où

[i]$_0$ est la concentration initiale de l'élément i dans le métal liquide
[i]$_f$ est la concentration finale de l'élément i dans le métal liquide
f$_s$ est la fraction solidifiée programmée.

Le tableau 2 donne les résultats obtenus pour les différents essais.

Tableau 2. Résultats obtenus (nd : non déterminé)

| Essai | Poids mesuré | [Fe]$_0$ | [Fe]$_f$ | X$_{Fe}$ | [Si]$_0$ | [Si]$_f$ | X$_{Si}$ | [Cu]$_0$ | [Cu]$_f$ | X$_{Cu}$ | [Zn]$_0$ | [Zn]$_f$ | X$_{Zn}$ | [Mg]$_0$ | [Mg]$_f$ | X$_{Mg}$ | [Cr]$_0$ | [Cr]$_f$ | X$_{Cr}$ |
|---|---|---|---|---|---|---|---|---|---|---|---|---|---|---|---|---|---|---|---|
| 1 | 1550 | 0,14 | 0,46 | 4,4 | 0,10 | 0,37 | 5,0 | 1,6 | 4,5 | 3,8 | 5,9 | 1,5 | 2,6 | 2,6 | 4,8 | 2,5 | nd | nd | nd |
| 2 | 1500 | 0,16 | 0,55 | 4,6 | 0,12 | 0,37 | 4,1 | 1,4 | 4,3 | 4,0 | 5,7 | 11,5 | 2,7 | 2,5 | 4,9 | 2,6 | nd | nd | nd |
| 3 | 1400 | nd | 0,54 | nd | nd | 0,41 | nd | nd | 4,1 | nd | nd | 10,8 | nd | nd | 4,3 | nd | nd | nd | nd |
| 4 | nd | 0.15 | 0,60 | 6,2 | nd | 0,44 | nd | 1,7 | 4,8 | 4,3 | 6,2 | 11,7 | 2,9 | 2,7 | 4,5 | 2,5 | 0,18 | 0,06 | 0,5 |
| 5 | 1700 | 0,09 | 0,26 | 3,9 | 0,06 | 0,37 | 8,3 | 2,0 | 4,56 | 3,1 | 6,0 | 10,5 | 2,4 | 1,8 | 4,9 | 3,7 | 0,10 | 0,02 | 0,3 |
| 6 | 1900 | 0,14 | 0,38 | 3,5 | 0,09 | 0,24 | 3,4 | 1,7 | 3,86 | 2,9 | 6,2 | 10,4 | 2.1 | 2,5 | 4,2 | 2,2 | 0,18 | 0,09 | 0,6 |

Les poids de métal solidifié obtenus sont en accord satisfaisant avec les poids visés.

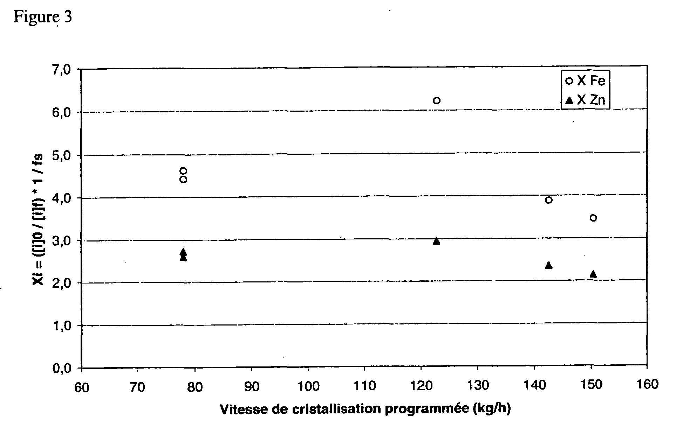

La figure 3 illustre les résultats obtenus. Les meilleurs résultats en terme de purification du fer sont obtenus pour les essais 3 et 4. On ne note par ailleurs pas d'augmentation importante de la purification des éléments Cu, Mg et Zn pour ces essais qui représentent donc un compromis particulièrement favorable.

La plus faible performance obtenue pour les essais 1 et 2 pourrait être liée avec la précipitation de cristaux intermétalliques de type $Al_3Fe$. La température atteinte par le métal liquide à la fin de ces essais (voir figure 2) est en effet proche de la température estimée à l'aide de modèles pour le début de la précipitation).

La plus faible performance obtenue pour les essais 5 et 6 pourrait être liée avec l'absence dans ce cas de refusion partielle de la masse solidifiée en cours d'opération. En effet la refusion partielle de la masse solidifiée en cours d'opération conduit à une purification supplémentaire. Dans certains cas, les performances obtenues avec les conditions des essais 1, 2, 5 ou 6 peuvent s'avérer suffisantes, notamment pour des mélanges de scrap peu enrichis en fer et silicium qui ne nécessitent pas une purification poussée.

**Revendications**

1. Procédé de fabrication d'un bloc de refusion à base d'aluminium destiné à l'élaboration d'alliage d'aluminium pour l'industrie aéronautique dans lequel

   (i) on approvisionne du scrap contenant majoritairement des alliages d'aluminium appartenant aux séries 2XXX, 6XXX et 7XXX pendant une étape d'approvisionnement ;
   (ii) on fait fondre ledit scrap dans un four de fusion de façon à obtenir un bain de métal liquide initial pendant une étape de fusion ;
   (iii) on fait subir au bain de métal liquide initial une purification par cristallisation fractionnée de façon à obtenir une masse solidifiée et un bain de liquide résiduel pendant une étape de ségrégation ;
   (iv) on récupère la masse solidifiée de façon à obtenir un bloc de refusion pendant une étape de récupération,

   dans lequel l'ensemble du métal est chargé initialement puis soumis à la cristallisation fractionnée, la vitesse de cristallisation donnée en masse de cristaux formés, exprimés en pourcentage du poids initialement chargé, par heure de cristallisation étant comprise entre environ 3,8 %/h et environ 6,2 %/h.

2. Procédé selon la revendication 1 dans lequel ledit scrap comporte majoritairement des alliages de la série 7XXX préférentiellement compris dans le groupe constitué de 7010, 7040, 7050, 7150, 7250, 7055, 7056, 7068, 7049, 7140, 7149, 7249, 7349, 7449, 7075, 7175 et 7475 ou de la série 2XXX.

3. Procédé selon une quelconque des revendications 1 à 2 dans lequel ladite masse solidifiée subit au moins une réfusion partielle au cours de l'étape de ségrégation.

4. Procédé selon une quelconque des revendications 1 à 3 dans lequel ladite cristallisation fractionnée est réalisée à l'aide d'un dispositif permettant d'effectuer la cristallisation à une vitesse prédéterminée.

5. Procédé selon une quelconque des revendications 1 à 4 dans lequel la vitesse de cristallisation donnée en masse de cristaux formés, exprimés en pourcentage du poids initialement chargé, par heure de cristallisation est comprise entre 4%/h et 6%/h.

6. Procédé selon une quelconque des revendications 1 à 5 dans lequel la vitesse de cristallisation est comprise entre environ 90 kg/h et environ 140 kg/h et de préférence entre environ 100 kg/h et environ 130 kg/h.

7. Procédé selon une quelconque des revendications 4 à 6 dans lequel l'étape de ségrégation est réalisée à l'aide d'un dispositif comprenant un creuset réfractaire (4), un four (6) muni d'au moins un moyen de chauffage (5), au moins un moyen de tassage (1), comprenant un embout de tassage (12), une tige solidaire de cet embout (11) et des moyens pour déplacer verticalement l'ensemble tige-embout (13), ledit dispositif comprenant également un moyen permettant de mesurer la hauteur de masse solide H et des moyens pour piloter le fonctionnement du ou des moyens de chauffage en fonction de H et de la valeur cible H' et dans lequel le moyen de tassage (1) est alternativement immergé et émergé.

8. Procédé selon une quelconque des revendications 1 à 7 dans lequel le rapport entre la masse du bloc de refusion obtenu et la masse initiale de scrap fondu est compris entre environ 50% et environ 90% et de manière préférée entre environ 60% et environ 80%.

9. Procédé selon une quelconque des revendications 1 à 3 dans lequel l'étape de ségrégation est réalisée à l'aide d'un dispositif comprenant un creuset réfractaire (4), un four (6) muni d'au moins un moyen de chauffage (5), au moins un moyen de tassage (1), comprenant un embout de tassage (12), une tige solidaire de cet embout (11) et des moyens pour déplacer verticalement l'ensemble tige-embout (13), un moyen de mesure permettant la mesure en continu de la température du métal liquide et une boucle de régulation permettant le pilotage des moyens de chauffage en fonction de la température du métal liquide et dans lequel on impose une vitesse de diminution prédéterminée de la température du métal liquide.

10. Procédé selon la revendication 9 dans lequel ladite vitesse de diminution prédéterminée de la température du métal liquide est comprise entre 1 et 5 °C/h et de préférence entre 2 et 4 °C/h.

11. Procédé selon une quelconque des revendications 1 à 10 dans lequel l'étape de ségrégation est stoppée quand la température du métal liquide atteint 570°C et de manière préférée quand elle atteint 580 °C.

12. Procédé selon une quelconque des revendications 1 à 11 dans lequel un égouttage est effectué pendant l'étape de récupération.

13. Procédé selon une quelconque des revendications 1 à 12 dans lequel la somme des teneurs en Zn, Cu, Mg et Li dudit bloc de refusion est d'au moins 3 % en poids, préférentiellement d'au moins 4 % en poids et de façon encore plus préférée d'au moins 5 % en poids.

14. Procédé selon une quelconque des revendications 1 à 13 dans lequel ledit bloc de refusion a un poids d'au moins 1000 kg et de manière préférée d'au moins 1300 kg.

15. Procédé de fabrication d'un produit semi-fini dans lequel on fait fondre au moins un bloc de refusion obtenu par le procédé selon une quelconque des revendications 1 à 14, on élabore un alliage destiné à l'industrie aéronautique, typiquement un alliage de la série 7XXX ou de la série 2XXX, on coule cet alliage sous la forme d'un produit semi-fini.

**Claims**

1. A manufacturing process for a remelt block containing aluminum designed for making aluminum alloy for the aircraft industry wherein

   (i) scrap containing mainly aluminum alloys belonging to series 2XXX, 6XXX and 7XXX is supplied during a supply stage;
   (ii) said scrap is melted in a smelting furnace in order to obtain an initial molten metal bath during a smelting stage;
   (iii) the initial molten metal bath is subjected to purification by fractional, crystallization in order to obtain a solidified mass and a bath of residual liquid during a segregation stage;
   (iv) the solidified mass is recovered in order to obtain a remelt block during a recovery stage,

   wherein all the metal is initially charged and then subjected to fractional crystallization; the crystallization speed given as the mass of formed crystals, expressed as a percentage of the weight initially charged, per hour of crystallization, being between about 3.8%/h and about 6.2%/h.

2. A process according to claim 1 wherein said scrap comprises mainly alloys of series 7XXX, preferentially included in the group made up of 7010, 7040, 7050, 7150, 7250, 7055, 7056, 7068, 7049, 7140, 7149, 7249, 7349, 7449, 7075, 7175 and 7475 or series 2XXX.

3. A process according to any of claims 1 to 2 wherein said solidified mass undergoes at least one partial remelting during the segregation stage

4. A process according to any of claims 1 to 3 wherein said fractional crystallization is carried out using a device making it possible to perform crystallization at a predetermined speed.

5. A process according to any of claims 1 to 4 wherein the crystallization speed given as the mass of formed crystals, expressed as a percentage of the weight initially charged, per hour of crystallization is between 4%/h and 6%/h.

6. A process according to any of claims 1 to 5 wherein the crystallization speed is between about 90 kg/h and about 140 kg/h and preferably between about 100 kg/h and about 130 kg/h.

7. A process according to any of claims 4 to 6 wherein the segregation stage is performed using a device including a heat-resistant crucible (4), a furnace (6) provided with at least one means of heating (5), at least one means of tamping (1), including a tamping end-piece (12), a stem interdependent of this end-piece (11) and means to move the stem/end-piece unit (13) vertically, said device also including a means for measuring the height of solid mass H and means for controlling the operation of the means of heating as a function of H and the target value H' and wherein the means of tamping (1) is alternatively immersed and emersed.

8. A process according to any of claims 1 to 7 wherein the relationship between the mass of the remelt block obtained and the initial molten scrap mass is between about 50% and about 90% and preferably between about 60% and about 80%.

9. A process according to any of claims 1 to 3 wherein the segregation stage is carried out using a device including a heat-resistant crucible (4), a furnace (6) provided with at least one means of heating (5), at least one means of tamping (1), including a tamping end-piece (12), a stem interdependent of this end-piece (11) and a means for moving the stem/end-piece unit (13) vertically, a means of measurement for continuously measuring the temperature of the molten metal and a control loop to control the means of heating as a function of the temperature of the molten metal and wherein a predetermined speed of reduction in the temperature of the molten metal is imposed.

10. A process according to claim 9 wherein said predetermined speed of reduction in the temperature of the molten metal is between 1 and 5 °C/h and preferably between 2 and 4 °C/h.

11. A process according to any of claims 1 to 10 wherein the segregation stage is stopped when the temperature of the molten metal reaches 570°C and preferably when it reaches 580 °C.

12. A process according to any of claims 1 to 11 wherein draining is carried out during the recovery stage.

13. A process according to any of claims 1 to 12 wherein the sum of the Zn, Cu, Mg and Li contents of said remelt block is at least 3% by weight, preferably at least 4% by weight even more preferably at least 5% by weight.

14. A process according to any of claims 1 to 13 wherein said remelt block has a weight of at least 1000 kg and preferably at least 1300 kg.

15. A manufacturing process for a semi-finished product wherein at least one remelt block, obtained by the process according to any of claims 1 to 14, is smelted; an alloy for the aircraft industry, typically an alloy of series 7XXX or series 2XXX is produced; this alloy is cast in the shape of a semi-finished product

**Patentansprüche**

1. Verfahren zur Herstellung eines Umschmelzblocks auf Basis von Aluminium für die Herstellung einer Aluminiumlegierung für die Luftfahrtindustrie, bei dem

> (i) in einem Bereitstellungsschritt Schrott bereitgestellt wird, der mehrheitlich aus Aluminiumlegierungen der Serien 2XXX, 6XXX und 7XXX besteht;
> (ii) der Schrott in einem Schmelzschritt im Schmelzofen aufgeschmolzen wird, um eine Ausgangsschmelze zu erhalten;
> (iii) die Ausgangsschmelze in einem Seigerungsschritt mittels fraktionierter Kristallisation gereinigt wird, um eine erstarrte Schmelzemasse und eine flüssige Restschmelze zu erhalten;
> (iv) die erstarrte Schmelzemasse in einem Rückgewinnungsschritt rückgewonnen wird, um einen Umschmelzblock zu erhalten,

bei dem zunächst das gesamte Metall in den Ofen chargiert und dann der fraktionierten Kristallisation unterworfen wird, wobei die Kristallisationsgeschwindigkeit - angegeben durch die Masse der gebildeten Kristalle, ausgedrückt in Prozent des anfänglich chargierten Gewichts - pro Stunde Kristallisation zwischen etwa 3,8 %/h und etwa 6,2 %/h liegt.

2. Verfahren nach Anspruch 1, bei dem der Schrott mehrheitlich Legierungen der Serie 7XXX, die vorzugsweise der Gruppe bestehend aus 7010, 7040, 7050, 7150, 7250, 7055, 7056, 7068, 7049, 7140, 7149, 7249, 7349, 7449, 7075, 7175 und 7475 angehören, oder der Serie 2XXX enthält.

3. Verfahren nach irgendeinem der Ansprüche 1 bis 2, bei dem die erstarrte Schmelzemasse wenigstens teilweise im Seigerungsschritt umgeschmolzen wird.

4. Verfahren nach irgendeinem der Ansprüche 1 bis 3, bei dem die fraktionierte Kristallisation mit Hilfe einer Vorrichtung erfolgt, die es gestattet, die Kristallisation mit einer vorbestimmten Geschwindigkeit durchzuführen.

5. Verfahren nach irgendeinem der Ansprüche 1 bis 4, bei dem die Kristallisationsgeschwindigkeit - angegeben durch die Masse der gebildeten Kristalle, ausgedrückt in Prozent des anfänglich chargierten Gewichts - pro Stunde Kristallisation zwischen 4 %/h und 6 %/h liegt.

6. Verfahren nach irgendeinem der Ansprüche 1 bis 5, bei dem die Kristallisationsgeschwindigkeit zwischen etwa 90 kg/h und etwa 140 kg/h und vorzugsweise zwischen etwa 100 kg/h und etwa 130 kg/h liegt.

7. Verfahren nach irgendeinem der Ansprüche 4 bis 6, bei dem der Seigerungsschritt mit Hilfe einer Vorrichtung erfolgt, welche einen feuerfesten Tiegel (4), einen Ofen (6) mit wenigstens einem Heizmittel (5), mindestens ein Stampfmittel (1) mit einem Stampfaufsatz (12), einem mit diesem Aufsatz fest verbundenen Schaft (11) und Mitteln zum vertikalen Verfahren der Schaft-Aufsatz-Einheit (13) umfasst, wobei die Vorrichtung zudem ein Mittel zum Messen der Höhe H der festen Masse sowie Mittel zum Steuern des Betriebs des bzw. der Heizmittel in Abhängigkeit von der Höhe H und des Zielwerts H' umfasst, und bei dem das Stampfmittel abwechselnd ein- und auftaucht.

8. Verfahren nach irgendeinem der Ansprüche 1 bis 7, bei dem das Verhältnis zwischen der Masse des erhaltenen Umschmelzblocks und der Ausgangsmasse des aufgeschmolzenen Schrotts zwischen etwa 50 % und etwa 90 % und vorzugsweise zwischen etwa 60 % und etwa 80 % liegt.

9. Verfahren nach irgendeinem der Ansprüche 1 bis 3, bei dem der Seigerungsschritt mit Hilfe einer Vorrichtung erfolgt, welche einen feuerfesten Tiegel (4), einen Ofen (6) mit wenigstens einem Heizmittel (5), mindestens ein Stampfmittel (1) mit einem Stampfaufsatz (12), einem mit diesem Aufsatz fest verbundenen Schaft (11) und Mitteln zum vertikalen Verfahren der Schaft-Aufsatz-Einheit (13), ein Messmittel zum kontinuierlichen Messen der Schmelzetemperatur und eine Regelschleife zum Steuern der Heizmittel in Abhängigkeit von der Schmelzetemperatur umfasst, und bei dem eine vorbestimmte Geschwindigkeit vorgegeben wird, mit der die Schmelzetemperatur erniedrigt wird.

10. Verfahren nach Anspruch 9, bei dem die vorbestimmte Geschwindigkeit, mit der die Schmelzetemperatur erniedrigt wird, zwischen 1 und 5 °C/h und vorzugsweise zwischen 2 und 4 °C/h liegt.

11. Verfahren nach irgendeinem der Ansprüche 1 bis 10, bei dem der Seigerungsschritt gestoppt wird, wenn die Schmelzetemperatur 570 °C erreicht, und vorzugsweise, wenn sie 580 °C erreicht.

12. Verfahren nach irgendeinem der Ansprüche 1 bis 11, bei dem im Rückgewinnungsschritt ein Entwässern erfolgt.

13. Verfahren nach irgendeinem der Ansprüche 1 bis 12, bei dem die Summe der Gehalte an Zn, Cu, Mg, und Li des Umschmelzblocks mindestens 3 Gew.-%, bevorzugt mindestens 4 Gew.-% und besonders bevorzugt mindestens 5 Gew.-% beträgt.

14. Verfahren nach irgendeinem der Ansprüche 1 bis 13, bei dem der Umschmelzblock ein Gewicht von mindestens 1000 kg und vorzugsweise von mindestens 1300 kg hat.

15. Verfahren zur Herstellung eines Halbzeugs, bei dem wenigstens ein mit dem Verfahren nach irgendeinem der Ansprüche 1 bis 14 erhaltener Umschmelzblock eingeschmolzen wird, eine Legierung für die Luftfahrtindustrie, typischerweise eine Legierung der Serie 7XXX oder der Serie 2XXX hergestellt wird, diese Legierung zu einem Halbzeug vergossen wird.

Figure 1

Figure 2

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 07166259 B
- JP 07207378 B
- JP 09178149 B
- JP 09263853 B
- JP 09078152 B
- EP 1520052 A
- EP 1520053 A
- WO 2005049875 A
- WO 2005095658 A
- US 5741348 A
- EP 1288319 A
- JP 0835021 A
- EP 1101830 A
- US 5060871 A
- EP 0091386 A
- US 6406515 B
- US 4734127 A
- JP 11100620 A
- US 6398845 B
- JP 58104132 A
- US 4221590 A
- US 4294612 A
- FR 2788283

**Littérature non-brevet citée dans la description**

- **WILSON et al.** *Journal de Physique,* 1987, C -75